# EUROPÄISCHE PATENTANMELDUNG

(11) **EP 3 945 343 A1**
(43) Veröffentlichungstag der Anmeldung: **02.02.2022**
(21) Anmeldenummer: 21186936.7
(22) Anmeldetag: 21.07.2021
(51) Int. Cl.: G01S 7/4912, G01S 17/931

(54) **OPTISCHE DETEKTIONSVORRICHTUNG, FAHRZEUG MIT WENIGSTENS EINER OPTISCHEN DETEKTIONSVORRICHTUNG UND VERFAHREN ZUM BETREIBEN EINER OPTISCHEN DETEKTIONSVORRICHTUNG**

(30) Priorität: 29.07.2020 DE 102020119941
(71) Anmelder: Valeo Schalter und Sensoren GmbH, 74321 Bietigheim-Bissingen (DE)
(72) Erfinder: BEUTH, Thorsten, 74321 Bietigheim-Bissingen (DE)
(74) Vertreter: Kluth, Philipp

(57) **Zusammenfassung**

Es werden eine optische Detektionsvorrichtung zur Überwachung wenigstens eines Überwachungsbereichs auf Objekte hin, ein Fahrzeug und ein Verfahren beschrieben. Die optische Detektionsvorrichtung umfasst wenigstens eine Sendeeinrichtung, mit der elektromagnetische Strahlen in den wenigstens einen Überwachungsbereich gesendet werden können, wenigstens eine Empfangseinrichtung, mit der elektromagnetische Strahlen aus dem wenigstens einen Überwachungsbereich empfangen werden können, wenigstens eine Auswerteeinrichtung, mit der aus empfangenen elektromagnetischen Strahlen Positionsinformationen und Farbinformationen (R, G, B) wenigstens eines erfassten Objektes ermittelt werden können. Wenigstens eine Empfangseinrichtung weist wenigstens eine Empfangseinheit (52R, 52G, 52B), die zum Empfang von elektromagnetischen Beleuchtungsstrahlen ausgestaltet ist, aus denen Farbinformationen (R, G, B) wenigstens eines Objekts ermittelt werden können, und wenigstens eine Empfangseinheit (54), die zum Empfang von elektromagnetischen Abtaststrahlen mit Wellenlängen in wenigstens einem vorgegebenen Wellenlängenbereich ausgestaltet ist, aus denen Positionsinformationen wenigstens eines erfassten Objekts ermittelt werden können, auf. Die Abtaststrahlen werden mit wenigstens einer Sendeeinrichtung gesendet und an dem wenigstens einen Objekt reflektiert. Wenigstens eine Empfangseinrichtung weist wenigstens zwei Abtast-Empfangseinheiten (54) auf, mit denen reflektierte elektromagnetische Abtaststrahlen empfangen werden können. Die wenigstens zwei Abtast-Empfangseinheiten (54) sind jeweils ausschließlich für den Empfang des wenigstens einen Wellenlängenbereich der elektromagnetischen Abtaststrahlen ausgestaltet und zwischen den wenigstens zwei Abtast-Empfangseinheiten (54) wenigstens eine Farb-Empfangseinheit (52R, 52G, 52B) angeordnet. Die wenigstens eine Farb-Empfangseinheit (52R, 52G, 52B) ist zum Empfang von elektromagnetischen Beleuchtungsstrahlen (34) ausgestaltet.

## Beschreibung

### Technisches Gebiet

Die Erfindung betrifft eine optische Detektionsvorrichtung zur Überwachung wenigstens eines Überwachungsbereichs auf Objekte hin, mit wenigstens einer Sendeeinrichtung, mit der elektromagnetische Strahlen in den wenigstens einen Überwachungsbereich gesendet werden können, mit wenigstens einer Empfangseinrichtung, mit der elektromagnetische Strahlen aus dem wenigstens einen Überwachungsbereich empfangen werden können, mit wenigstens einer Auswerteeinrichtung, mit der aus empfangenen elektromagnetischen Strahlen Positionsinformationen und Farbinformationen wenigstens eines erfassten Objektes ermittelt werden können, wobei wenigstens eine Empfangseinrichtung aufweist wenigstens eine Empfangseinheit, die zum Empfang von elektromagnetischen Beleuchtungsstrahlen ausgestaltet ist, aus denen Farbinformationen wenigstens eines Objekts ermittelt werden können, und wenigstens eine Empfangseinheit, die zum Empfang von elektromagnetischen Abtaststrahlen mit Wellenlängen in wenigstens einem vorgegebenen Wellenlängenbereich ausgestaltet ist, aus denen Positionsinformationen wenigstens eines erfassten Objekts ermittelt werden können, wobei die Abtaststrahlen mit wenigstens einer Sendeeinrichtung gesendet und an dem wenigstens einen Objekt reflektiert werden können.

Ferner betrifft die Erfindung ein Fahrzeug mit wenigstens einer optischen Detektionsvorrichtung zur Überwachung wenigstens eines Überwachungsbereichs auf Objekte hin und wenigstens ein Fahrerassistenzsystem, mit dem auf Basis von Positionsinformation und/oder Farbinformationen wenigstens eines erfassten Objekts, die mit der wenigstens einen Detektionsvorrichtung ermittelt werden, das Fahrzeug autonom oder teilautonom betrieben werden kann.

Außerdem betrifft die Erfindung ein Verfahren zum Betreiben einer optischen Detektionsvorrichtung zur Überwachung wenigstens eines Überwachungsbereichs auf Objekte hin, bei dem elektromagnetische Strahlen mit wenigstens einer Sendeeinrichtung in den wenigstens einen Überwachungsbereich gesendet werden, elektromagnetische Strahlen aus dem wenigstens einen Überwachungsbereich mit wenigstens einer Empfangseinrichtung empfangen werden, aus empfangenen elektromagnetischen Strahlen mit wenigstens einer Auswerteeinrichtung Positionsinformationen und Farbinformationen wenigstens eines erfassten Objekts ermittelt werden, wobei elektromagnetische Beleuchtungsstrahlen mit wenigstens einem Empfangseinheit empfangen werden und aus den empfangenen Beleuchtungsstrahlen Farbinformationen wenigstens eines Objekts ermittelt werden, und elektromagnetische Abtaststrahlen mit Wellenlängen in wenigstens einem vorgegebenen Wellenlängenbereich, die mit wenigstens einer Sendeeinrichtung gesendet und an wenigstens einem Objekt reflektiert werden, mit wenigstens einer Empfangseinheit wenigstens einer Empfangseinrichtung empfangen werden und aus wenigstens einem Teil der empfangenen Abtaststrahlen Positionsinformationen wenigstens eines erfassten Objekts ermittelt werden.

### Stand der Technik

Aus der US 9.182.490 B2 ist ein elektronisches Gerät bekannt, das Laufzeit-Bildpunkte und einen Lichtimpuls-Emitter zur Aufnahme von Tiefenbildern enthält. Ein elektronisches Gerät kann eine oder mehrere lichtemittierende Komponenten wie eine sichtbare Lichtquelle, wie z.B. einen Kamerablitz oder eine LED-Lichtquelle, und einen nicht sichtbaren Lichtimpulsgeber enthalten. Eine Bildsensor-Pixelmatrix kann eine Anordnung von einzelnen Laufzeit-Bildpunkte wie z.B. Bildsensor-Pixel enthalten. Im Allgemeinen kann ein Array jede geeignete Anzahl von Bildpunkten haben, einschließlich Mono- und Farb-Laufzeit-Bildpunkte. Farbbilddaten können aus dem farbigen Hintergrund des erfassten Lichts in Laufzeit-Bildpunkten extrahiert werden. Zu diesem Zweck kann jeder Laufzeit-Bildpunkt mit einem Farbanpassungsgerät abgedeckt werden. Laufzeit-Bildpunkte können so konfiguriert werden, dass sie von Objekten in einer realen Szene reflektiertes Licht empfangen. Ein Lichtimpuls-Sender, wie ein Infrarot (IR)-Beleuchtungsgerät, kann so konfiguriert werden, dass er einen oder mehrere Impulse, z.B. Infrarotlicht, aussendet, die mit dem Betrieb der Laufzeit-Bildpunkte synchronisiert sind.

Der Erfindung liegt die Aufgabe zugrunde, eine Detektionsvorrichtung, ein Fahrzeug und ein Verfahren der eingangs genannten Art zu gestalten, mit dem die Ermittlung von Farbinformationen und Positionsinformationen von Objekten verbessert werden können.

### Offenbarung der Erfindung

Diese Aufgabe wird bei der Detektionsvorrichtung erfindungsgemäß dadurch gelöst, dass wenigstens eine Empfangseinrichtung wenigstens zwei Abtast-Empfangseinheiten aufweist, mit denen reflektierte elektromagnetische Abtaststrahlen empfangen werden können, die wenigstens zwei Abtast-Empfangseinheiten jeweils ausschließlich für den Empfang des wenigstens einen Wellenlängenbereich der elektromagnetischen Abtaststrahlen ausgestaltet sind und zwischen den wenigstens zwei Abtast-Empfangseinheiten wenigstens eine Farb-Empfangseinheit angeordnet ist die wenigstens eine Farb-Empfangseinheit zum Empfang von elektromagnetischen Beleuchtungsstrahlen ausgestaltet ist.

Erfindungsgemäß weist wenigstens eine Empfangseinrichtung wenigstens zwei Abtast-Empfangseinheiten auf. Mit den Abtast-Empfangseinheiten können reflektierte elektromagnetische Abtaststrahlen empfangen werden. Auf diese Weise können Positionsinformationen eines entsprechenden Objekts ermittelt werden.

Zwischen den wenigstens zwei Abtastbereichen ist wenigstens eine Farb-Empfangseinheit angeordnet. Durch die Farb-Empfangseinheit werden die wenigstens zwei Abtast-Empfangseinheiten räumlich voneinander getrennt. Auf diese Weise kann ein Übersprechen zwischen den wenigstens zwei Abtast-Empfangseinheiten beim Empfang von reflektierten Abtaststrahlen vermieden werden. So kann die Genauigkeit der Bestimmung der Positionsinformationen des wenigstens einen Objekts verbessert werden.

Die Abtast-Empfangseinheiten und die Farb-Empfangseinheiten können vorteilhafterweise getrennt voneinander angeordnet und getrennt voneinander ausgelesen werden. Auf diese Weise kann für die Empfangseinheiten das jeweilige Signal-Rausch-Verhältnis verbessert werden.

Mit der optischen Detektionsvorrichtung können Positionsinformationen in Form von Entfernungen, Richtungen und/oder Geschwindigkeiten von erfassten Objekten relativ zur optischen Detektionsvorrichtung erfasst werden. Ferner können mit der optischen Detektionsvorrichtung Farbinformationen in Form von Farbintensitäten, Farbverläufen, Grauwert-Informationen oder dergleichen von Objekten erfasst werden.

Mit der wenigstens einen Farb-Empfangseinheit können elektromagnetische Beleuchtungsstrahlen empfangen werden, aus denen Farbinformationen wenigstens eines Objekts ermittelt werden können. Bei den elektromagnetischen Beleuchtungsstrahlen kann es sich vorteilhafterweise um natürliche Beleuchtungsstrahlen, insbesondere Sonnenlicht, und/oder künstliche Beleuchtungsstrahlen, insbesondere von künstlichen Lichtquellen, handeln. Die elektromagnetischen Beleuchtungsstrahlen können durch externe, also nicht in der optischen Detektionsvorrichtung enthaltene, Lichtquellen oder durch hierfür vorgesehene interne Lichtquellen der optischen Detektionsvorrichtung erzeugt werden. Mit den elektromagnetischen Beleuchtungsstrahlen kann ein Objekt angeleuchtet werden. Die reflektierten elektromagnetischen Beleuchtungsstrahlen können mit wenigstens einer Farb-Empfangseinheit der wenigstens einen Empfangseinrichtung der optischen Detektionsvorrichtung empfangen werden.

Vorteilhafterweise können die Farbinformationen in einem RGB-Farbraum ermittelt und/oder dargestellt werden. Auf diese Weise können die Farbinformationen bezogen auf die Farbwahrnehmung des menschlichen Auges angegeben werden.

Wenigstens eine Sendeeinrichtung kann wenigstens eine Lichtquelle, insbesondere wenigstens einen Laser, aufweisen, mit der elektromagnetische Abtaststrahlen erzeugt werden können. Die wenigstens eine Lichtquelle kann vorteilhafterweise zur Aussendung von elektromagnetischen Abtaststrahlen in dem vorgegebenen Wellenlängenbereich ausgestaltet sein. Auf diese Weise können die Abtaststrahlen besser von den Beleuchtungsstrahlen unterschieden werden. Zusätzlich kann die Intensität der gesendeten Abtaststrahlen größer sein als die Intensität der Beleuchtungsstrahlen. Auf diese Weise ein Signal-Rausch-Verhältnis beim Empfang der Abtaststrahlen verbessert werden.

Bei den elektromagnetischen Abtaststrahlen kann es sich vorteilhafterweise um Lichtsignale, insbesondere Lichtpulse, im Besonderen Laserpulse, handeln. Lichtsignale können definiert, insbesondere codiert, und zugeordnet werden. Mit gepulsten Lichtsignalen, insbesondere Lichtpulsen, können Laufzeitmessungen durchgeführt werden, mit denen Entfernungen bestimmt werden können.

Vorteilhafterweise kann wenigstens eine Sendeeinrichtung wenigstens eine Strahlbeeinflussungseinrichtung, insbesondere wenigstens ein optisches Element, im Besonderen wenigstens eine optische Linse, wenigstens einen Diffusor, wenigstens ein Beugungselement, wenigstens ein diffraktives optisches Element und/oder wenigstens ein andersartiges strahlformendes Element oder dergleichen, aufweisen. Auf diese Weise können die elektromagnetischen Abtaststrahlen entsprechend geformt und/oder gelenkt werden. So können die elektromagnetischen Abtaststrahlen aufgeweitet werden, um einen entsprechend ausgedehnten Sichtbereich für die optische Detektionsvorrichtung zu ermöglichen.

Vorteilhafterweise kann wenigstens eine Empfangseinrichtung wenigstens eine Strahlbeeinflussungseinrichtung aufweisen, mit der die empfangenen elektromagnetischen Strahlen entsprechend geformt und/oder gelenkt werden können. Vorteilhafterweise kann die wenigstens einen Strahlbeeinflussungseinrichtung eine abbildende Funktion haben. So können die Oberflächen eines Objekts, an dem die Abtaststrahlen und/oder die Beleuchtungsstrahlen reflektiert werden, auf einen entsprechenden Bereich der wenigstens einen Empfangseinrichtung abgebildet werden.

Vorteilhafterweise kann die optische Detektionsvorrichtung nach einem Lichtlaufzeitverfahren, insbesondere einem Lichtimpulslaufzeitverfahren, arbeiten. Nach dem Lichtimpulslaufzeitverfahren arbeitende optische Detektionsvorrichtungen können als Time-of-Flight- (TOF), Light-Detection-and-Ranging-Systeme (LiDAR), Laser-Detection-and-Ranging-Systeme (LaDAR) oder dergleichen ausgestaltet und bezeichnet werden. Dabei wird eine Laufzeit vom Aussenden eines Abtaststrahls, insbesondere eines Lichtpulses, mit einer Sendeeinrichtung und dem Empfang des entsprechenden reflektierten Abtaststrahls mit einer Empfangseinrichtung gemessen und daraus eine Entfernung zwischen der Detektionsvorrichtung und dem erfassten Objekt ermittelt.

Vorteilhafterweise kann die optische Detektionsvorrichtung nach einem sogenannten Flash-Verfahren arbeiten, bei dem entsprechend aufgeweitete elektromagnetische Strahlen, insbesondere Abtaststrahlen, den Überwachungsbereich ähnlich einem Blitzlicht ausleuchten.

Alternativ kann die optische Detektionsvorrichtung vorteilhafterweise als scannendes System ausgestaltet sein. Dabei kann mit elektromagnetischen Abtaststrahlen ein Überwachungsbereich abgetastet, also abgescannt, werden. Dazu können die Ausbreitungsrichtungen der Abtaststrahlen über den Überwachungsbereich geschwenkt werden. Hierbei kann wenigstens eine Strahlbeeinflussungseinrichtung, insbesondere eine Scaneinrichtung, eine Umlenkspiegeleinrichtung oder dergleichen, zum Einsatz kommen.

Vorteilhafterweise kann die optische Detektionsvorrichtung als laserbasiertes Entfernungsmesssystem ausgestaltet sein. Ein laserbasiertes Entfernungsmesssystem kann als Lichtquelle wenigstens einer Sendeeinrichtung wenigstens einen Laser, insbesondere einen Diodenlaser, aufweisen. Mit einem Laser können insbesondere gepulste elektromagnetische Abtaststrahlen, insbesondere Laserpulse, gesendet werden. Mit dem Laser können Abtaststrahlen in für das menschliche Auge sichtbaren oder nicht sichtbaren Wellenlängenbereichen, insbesondere im nahen Infrarot, emittiert werden. Entsprechend kann wenigstens eine Empfangseinrichtung wenigstens einen wenigstens abschnittsweise für die Wellenlänge des ausgesendeten Lichtes ausgelegten Empfänger, insbesondere einen Punktsensor, Zeilensensor oder Flächensensor, im Besonderen eine (Lawinen)fotodiode, eine Photodiodenzeile, einen CCD-Sensor, einen Active-Pixel-Sensor, insbesondere einen CMOS-Sensor oder dergleichen, aufweisen. Das laserbasierte Entfernungsmesssystem kann vorteilhafterweise ein Laserscanner sein. Mit einem Laserscanner kann ein Überwachungsbereich mit insbesondere gepulsten Laserstrahlen abgetastet werden.

Die Erfindung kann bei einem Fahrzeug, insbesondere einem Kraftfahrzeug, verwendet werden. Vorteilhafterweise kann die Erfindung bei einem Landfahrzeug, insbesondere einem Personenkraftwagen, einem Lastkraftwagen, einem Bus, einem Motorrad oder dergleichen, einem Luftfahrzeug und/oder einem Wasserfahrzeug verwendet werden. Die Erfindung kann auch bei Fahrzeugen eingesetzt werden, die autonom oder wenigstens teilautonom betrieben werden können. Die Erfindung ist jedoch nicht beschränkt auf Fahrzeuge. Sie kann auch im stationären Betrieb und/oder in der Robotik eingesetzt werden.

Die optische Detektionsvorrichtung kann vorteilhafterweise mit wenigstens einer elektronischen Steuervorrichtung eines Fahrzeugs, insbesondere einem Fahrerassistenzsystem und/oder einer Fahrwerksregelung und/oder einer Fahrer-Informationseinrichtung und/oder einem Parkassistenzsystem und/oder einer Gestenerkennung oder dergleichen, verbunden oder Teil einer solchen sein. Auf diese Weise kann das Fahrzeug autonom oder teilautonom betrieben werden.

Mit der optischen Detektionsvorrichtung können stehende oder bewegte Objekte, insbesondere Fahrzeuge, Personen, Tiere, Pflanzen, Hindernisse, Fahrbahnunebenheiten, insbesondere Schlaglöcher oder Steine, Fahrbahnbegrenzungen, Verkehrszeichen, Freiräume, insbesondere Parklücken, Niederschlag oder dergleichen, erfasst werden.

Bei einer vorteilhaften Ausführungsform kann der Wellenlängenbereich der Abtaststrahlen außerhalb des für das menschliche Auge sichtbaren Wellenlängenbereichs liegen und/oder wenigstens eine Sendeeinrichtung zur Sendung von Abtaststrahlen außerhalb des für das menschliche Auge sichtbaren Wellenlängenbereichs ausgestaltet sein und/oder wenigstens eine Abtast-Empfangseinheit zum Empfang von Abtaststrahlen außerhalb des für das menschliche Auge sichtbaren Wellenlängenbereichs ausgestaltet sein. Abtaststrahlen außerhalb des für das menschliche Auge sichtbaren Wellenlängenbereichs können in Einsatzbereichen verwendet werden, in denen erhöhte Anforderungen an die Augensicherheit bestehen und/oder etwaiges blenden von Personen durch die Abtaststrahlen vermieden werden soll. Insbesondere bei der Verwendung der Detektionsvorrichtung im Straßenverkehr dürfen die Abtaststrahlen andere Verkehrsteilnehmer nicht blenden.

Vorteilhafterweise kann wenigstens eine Sendeeinrichtung zur Sendung von Abtaststrahlen außerhalb des sichtbaren Wellenlängenbereichs ausgestaltet sein. Auf diese Weise können mit der wenigstens einen Sendeeinrichtung für Menschen nicht sichtbare Abtaststrahlen erzeugt werden.

Alternativ oder zusätzlich kann vorteilhafterweise wenigstens eine Abtast-Empfangseinheit zum Empfang von Abtaststrahlen außerhalb des sichtbaren Wellenlängenbereichs ausgestaltet sein. Auf diese Weise werden nur elektromagnetische Strahlen, insbesondere die Abtaststrahlen, aus dem entsprechenden nicht sichtbaren Wellenlängenbereich empfangen. Elektromagnetische Strahlen aus einem sichtbaren Wellenlängenbereich hingegen werden nicht empfangen. So kann das Signal-Rausch-Verhältnis bei der wenigstens einen Abtast-Empfangseinheit verbessert werden.

Vorteilhafterweise kann der Wellenlängenbereich der Abtaststrahlen im Nahinfrarot (NIR) liegen.

Bei einer weiteren vorteilhaften Ausführungsform kann wenigstens eine Farb-Empfangseinheit zum Empfang von Beleuchtungsstrahlen zumindest teilweise in einem für das menschliche Auge sichtbaren Wellenlängenbereich ausgestaltet sein und/oder wenigstens zwei Farb-Empfangseinheiten können zum Empfang von Beleuchtungsstrahlen in unterschiedlichen, zumindest teilweise für das menschliche Auge sichtbaren Wellenlängenbereich ausgestaltet sein.

Auf diese Weise können mit den Farb-Empfangseinheiten Farben empfangen werden, welche auch für das menschliche Auge sichtbar sind. Durch die Verwendung von wenigstens zwei Farb-Empfangseinheiten, welche in unterschiedlichen Wellenlängenbereichen arbeiten, können Farben unterschieden werden. Auf diese Weise können Farbinformationen in Form von Farbstufen oder Graustufen ermittelt werden.

Vorteilhafterweise kann mit wenigstens einem, insbesondere mehr als zwei Farb-Empfangseinheiten der gesamte für das menschliche Auge sichtbare Wellenlängenbereich abgedeckt werden. Auf diese Weise können vollständige Farbinformationen über das Objekt ermittelt werden.

Vorteilhafterweise können die Wellenlängenbereiche der Farb-Empfangseinheiten insgesamt das Spektrum des sichtbaren Sonnenlichts abdecken. Auf diese Weise können mit der Detektionsvorrichtung Farbinformationen gewonnen werden, wie sie auch das menschliche Auge erfassen kann.

Dadurch, dass die Abtaststrahlen außerhalb des sichtbaren Bereichs liegen, können die Abtaststrahlen getrennt von den Beleuchtungsstrahlen erfasst werden.

Bei einer weiteren vorteilhafte Ausführungsform kann wenigstens eine Farb-Empfangseinheit zum Empfang von Beleuchtungsstrahlen in einem zumindest teilweise für das menschliche Auge sichtbaren roten Wellenlängenbereich ausgestaltet sein, wenigstens eine Farb-Empfangseinheit kann zum Empfang von Beleuchtungsstrahlen in einem zumindest teilweise für das menschliche Auge sichtbaren blauen Wellenlängenbereich ausgestaltet sein und wenigstens eine Farb-Empfangseinheit kann zum Empfang von Beleuchtungsstrahlen im grünen Wellenlängenbereich ausgestaltet sein. Auf diese Weise können Farbinformationen in einer Rot-Grün-Blau-(RGB)-Darstellung ermittelt werden. Mit einer RGB-Darstellung kann die typische Sensibilität des menschlichen Auges simuliert werden.

Bei einer weiteren vorteilhaften Ausführungsform kann eine Mehrzahl von Farb-Empfangseinheiten zum Empfang von Beleuchtungsstrahlen in unterschiedlichen, zumindest teilweise für das menschliche Auge sichtbaren Wellenlängenbereichen ausgestaltet sein, wobei die Farb-Empfangseinheiten entsprechend der typischen Sensibilität des menschlichen Auges gewichtet sein können. Auf diese Weise können die Farbinformationen, welche mit der Detektionsvorrichtung ermittelt werden können, in einer für das menschliche Auge vergleichbaren Weise angegeben werden.

Bei einer weiteren vorteilhaften Ausführungsform kann eine Anordnung und/oder Anzahl von mehreren Farb-Empfangseinheiten entsprechend der typischen Sensibilität des menschlichen Auges vorgegeben sein.

Vorteilhafterweise können RGB-Farb-Empfangseinheiten in einem vorgegebenen Muster angeordnet sein. Auf diese Weise können die Rotanteile, Grünanteile und Blauanteile der Beleuchtungsstrahlen getrennt voneinander in unterschiedlichen Farb-Empfangseinheiten mit entsprechender Gewichtung ermittelt werden.

Alternativ oder zusätzlich kann vorteilhafterweise die Anzahl von entsprechenden RGB-Farb-Empfangseinheiten mit entsprechende Gewichtung vorgegeben sein. So kann die Sensibilität des menschlichen Auges mithilfe der Detektionsvorrichtung noch besser simuliert werden.

Vorteilhafterweise können mehrere Farb-Empfangseinheiten ähnlich einem Bayer-Filter angeordnet sein. Dabei können insbesondere grünempfindliche Farb-Empfangseinheiten (Grün-Empfangseinheit) teilweise ersetzt werden durch Abtast-Empfangseinheiten. Um dennoch eine der typischen Sensitivität des menschlichen Auges zumindest ähnliche Sensibilität zu erreichen, können die Grün-Empfangseinheiten im Vergleich zu den blauempfindlichen Farb-Empfangseinheiten (Blau-Empfangseinheiten) und den rotempfindlichen Farb-Empfangseinheiten (Rot-Empfangseinheiten) doppelt gewichtet werden.

Bei einer weiteren vorteilhaften Ausführungsform kann wenigstens eine Empfangseinrichtung mehrere Farb-Empfangseinheiten für unterschiedliche Wellenlängenbereiche umfassen, welche unterschiedliche Empfindlichkeiten aufweisen. Auf diese Weise kann können die Farb-Empfangseinheiten zur Simulation der Sensibilität des menschlichen Auges unterschiedlich gewichtet werden.

Vorteilhafterweise können Farb-Empfangseinheiten für einen Wellenlängenbereich, insbesondere den grünen Wellenlängenbereich, empfindlicher sein, als die beiden Farb-Empfangseinheit die anderen Wellenlängenbereiche, insbesondere den sichtbaren roten Wellenlängenbereich und den sichtbaren blauen Wellenlängenbereich. Auf diese Weise kann eine verringerte Anzahl von Farb-Empfangseinheit für einen Wellenlängenbereich, insbesondere den grünen Wellenlängenbereich, im Vergleich zu einem Bayer-Filter entsprechend ausgeglichen werden, um die Sensibilität des menschlichen Auges besser zu simulieren.

Bei einer weiteren vorteilhaften Ausführungsform kann wenigstens eine Empfangseinrichtung wenigstens zwei Farb-Empfangseinheiten für unterschiedliche Wellenlängenbereiche aufweisen, wobei jede Farb-Empfangseinheit ein jeweiliges Filtermittel für den entsprechenden Wellenlängenbereich umfassen kann, wobei Filtermittel von wenigstens zwei Farb-Empfangseinheiten, welche für zwei unterschiedliche Wellenlängenbereiche vorgesehen sind, unterschiedliche Transparenz aufweisen können, und/oder wobei jede Farb-Empfangseinheit wenigstens ein elektrooptisches Empfangselement umfassen kann, wobei Empfangselemente von wenigstens zwei Farb-Empfangseinheiten, welche für zwei unterschiedliche Wellenlängenbereiche vorgesehen sind, unterschiedliche Empfindlichkeiten aufweisen können. Auf diese Weise können die Farb-Empfangseinheiten entsprechend der typischen Sensibilität des menschlichen Auges gewichtet werden.

Vorteilhafterweise kann wenigstens eine Farb-Empfangseinheit entweder wenigstens ein Filtermittel oder wenigstens ein elektrooptisches Empfangselement aufweisen.

Vorteilhafterweise kann wenigstens eine Farb-Empfangseinheit sowohl wenigstens ein Filtermittel als auch wenigstens ein elektrooptisches Empfangselement aufweisen. Dabei kann wenigstens ein Filtermittel wenigstens einem elektrooptischen Element vorgeordnet sein. Wenigstens ein Filtermittel kann auch in wenigstens Empfangselement integriert sein. Insbesondere kann das wenigstens einen Empfangselement intrinsisch für eine entsprechende Wellenlängenbereich empfindlich sein.

Mit dem Filtermittel können die entsprechenden Wellenlängenbereiche, insbesondere Rot, Grün oder Blau, transmittiert und alle anderen Wellenbereiche herausgefiltert werden. Auf diese Weise kann das entsprechende elektrooptische Element lediglich den entsprechenden Wellenlängenbereich empfangen, für den die entsprechende Farb-Empfangseinheit ausgelegt ist.

Mit elektrooptischen Elementen können die elektromagnetischen Strahlen in elektrische Informationen, insbesondere elektrische Signale, umgewandelt werden. Die elektrischen Informationen können mit einer elektrischen Auswerteeinrichtung entsprechend verwendet, insbesondere verarbeitet, werden.

Vorteilhafterweise können die Filtermittel von wenigstens zwei Farb-Empfangseinheiten, welche für unterschiedliche Wellenlängenbereiche vorgesehen sind, unterschiedliche Transparenz aufweisen. Auf diese Weise können die empfangenen Farben entsprechend der typischen Sensibilität des menschlichen Auges gewichtet werden.

Um eine typische Sensitivität zu erreichen, die der Sensibilität des menschlichen Auges ähnlich ist, kann vorteilhafterweise bei einer RGB-Anordnung die Transparenz der Rotfilter und der Blaufilter gegenüber den Grünfiltern geringer sein.

Vorteilhafterweise kann die Transparenz der Grünfilter doppelt so groß sein wie die Transparenz der Rotfilter und die Transparenz der Blaufilter. Auf diese Weise kann hardwaremäßig ein Mangel an Grün-Empfangseinheiten, bei dem bezogen auf einen klassischen Bayer Filter die Hälfte der Grün-Empfangseinheiten durch Abtast-Empfangseinheiten ersetzt wird, ausgeglichen werden.

Alternativ oder zusätzlich können elektrooptische Empfangselemente, welche für unterschiedliche Wellenlängenbereiche vorgesehen sind, unterschiedliche Empfindlichkeiten aufweisen. Die unterschiedliche Empfindlichkeit kann auf hardwaremäßigem und/oder softwaremäßigem Weg realisiert werden.

Vorteilhafterweise können für die elektrooptischen Empfangselemente der bezüglich des zugewiesenen Wellenlängenbereichs unterschiedlichen Farb-Empfangseinheiten mit unterschiedliche Auslesezeiten ausgelesen werden. Auf diese Wiese kann die Intensität der empfangenen reflektierten Beleuchtungsstrahlen abhängig von dem Wellenlängenbereich über die Auslesezeit gewichtet werden.

Alternativ oder zusätzlich können die Ergebnisse der Messungen mit den entsprechenden elektrooptischen Empfangselementen abhängig von den zugewiesenen Wellenlängenbereichen gewichtet werden. Dies kann auf softwaremäßigem Wege insbesondere bei einer Nachbearbeitung der Messung erfolgen.

Vorteilhafterweise können die Ergebnisse der Messungen mit den Grün-Empfangseinheiten softwareseitig verdoppelt werden. Auf diese Weise kann softwareseitig der Mangel an Grün-Empfangseinheiten im Vergleich zu einer Bayer-Matrix ausgeglichen werden.

Bei einer weiteren vorteilhaften Ausführungsform kann wenigstens eine Empfangseinheit wenigstens ein elektrooptisches Empfangselement aufweisen oder daraus bestehen, welches für den Empfang von elektromagnetischen Strahlen wenigstens in dem entsprechenden Wellenlängenbereich und zur Umwandlung in elektrische Signale ausgestaltet sein kann, und/oder wenigstens eine Empfangseinheit kann wenigstens ein Filtermittel aufweisen, welches zur Transmission des entsprechenden Wellenlängenbereiches ausgestaltet ist.

Vorteilhafterweise kann wenigstens eine Empfangseinheit, insbesondere wenigstens eine Farb-Empfangseinheit und/oder wenigstens eine Abtast-Empfangseinheit, entweder wenigstens ein Filtermittel oder wenigstens ein elektrooptisches Empfangselement aufweisen.

Vorteilhafterweise kann wenigstens ein eine Empfangseinheit, insbesondere wenigstens eine Farb-Empfangseinheit und/oder wenigstens eine Abtast-Empfangseinheit, sowohl wenigstens ein Filtermittel als auch wenigstens ein elektrooptisches Empfangselement aufweisen. Dabei kann wenigstens ein Filtermittel wenigstens einem elektrooptischen Element vorgeordnet sein. Wenigstens ein Filtermittel kann auch in wenigstens Empfangselement integriert sein. Insbesondere kann das wenigstens einen Empfangselement intrinsisch für eine entsprechende Wellenlängenbereich empfindlich sein.

Durch das wenigstens eine Filterelement werden nur die elektromagnetischen Strahlen, insbesondere Abtaststrahlen und/oder Beleuchtungsstrahlen, in dem vorgegebenen Wellenlängenbereich der entsprechenden Empfangseinheit durchgelassen und mit dem entsprechenden elektrooptischen Element in elektrische Signale umgewandelt.

Vorteilhafterweise kann wenigstens ein elektrooptisches Empfangselement Teil eines elektrooptischen Empfängers sein, der als Punktsensor, Zeilensensor oder Flächensensor, im Besonderen als (Lawinen)fotodiode, als Photodiodenzeile, als CCD-Sensor, als Active-Pixel-Sensor, insbesondere als CMOS-Sensor oder dergleichen, ausgestaltet ist. Bei derartigen Empfängern können die entsprechenden Empfangselemente gezielt angesteuert und ausgelesen werden. Ferner können auf diese Weise die Empfangselemente kompakt realisiert werden. Die Empfangselemente von Empfangseinheiten können auch als "Pixel" bezeichnet werden.

Bei wenigstens einem Filtermittel kann es sich um einen optischen Filter oder eine Maskierung handeln. Optische Filter können separat von den elektrooptischen Empfangselementen hergestellt und nachträglich vor diesen montiert werden. Alternativ oder zusätzlich kann wenigstens ein optisches Empfangselement mit einem entsprechenden Filter maskiert sein. Auf diese Weise kann eine Kombination von elektrooptischen Elementen mit Maskierung insbesondere auf mikromechanischem Wege erfolgen.

Die Filtermittel können auch in einer gemeinsamen Filtermatrix oder einem Filter Array realisiert sein, welche unterschiedliche Abschnitte mit Filterfunktionen für unterschiedliche Wellenlängenbereiche aufweist. Auf diese Weise können die Filtermittel einfacher montiert werden.

Mit Hilfe von optischen Filtern kann mit dem entsprechenden Empfangseinheit die Intensität des durchgelassenen Wellenlängenbereichs der elektromagnetischen Strahlen bestimmt werden.

Wenigstens ein Filtermittel kann einen optischen Bandbreitenfilter aufweisen. Mit einem optischen Bandbreitenfilter, welcher auch als Bandpass bezeichnet werden kann, können elektromagnetische Strahlen, deren Wellenlänge sich nicht innerhalb der Bandbreite des Bandbreitenfilters herausgefiltert werden. Auf diese Weise kann ein Signal-Rausch-Verhältnis für die empfangenen elektromagnetischen Strahlen verbessert werden.

Vorteilhafterweise kann die Bandbreite des Bandbreitenfilters für den Wellenlängenbereich der Abtaststrahlen so vorgegeben sein, dass auch elektromagnetische Abtaststrahlen, deren Wellenlänge nach der Reflexion an einem Objekt durch Dopplereffekte verschoben sind, den entsprechenden Bandbreitenfilter passieren können. Eine Dopplerverschiebung der elektromagnetischen Abtaststrahlen kann insbesondere durch Bewegungen von Objekten relativ zur Detektionsvorrichtung hervorgerufen werden. Aus der Dopplerverschiebung kann eine Geschwindigkeit eines Objekts relativ zur Detektionsvorrichtung bestimmt werden.

Ferner wird die Aufgabe erfindungsgemäß bei dem Fahrzeug dadurch gelöst, dass das Fahrzeug wenigstens eine erfindungsgemäße optische Detektionsvorrichtung aufweist.

Außerdem wird die Aufgabe erfindungsgemäß bei dem Verfahren dadurch gelöst, dass die reflektierten elektromagnetischen Abtaststrahlen mit wenigstens zwei Abtast-Empfangseinheiten der wenigstens einen Empfangseinrichtung empfangen werden, wobei mit den wenigstens zwei Abtast-Empfangseinheiten ausschließlich elektromagnetische Strahlen mit Wellenlängen in dem wenigstens einen Wellenlängenbereich der elektromagnetischen Abtaststrahlen empfangen werden, die reflektierten elektromagnetischen Beleuchtungsstrahlen mit wenigstens einer Farb-Empfangseinheit empfangen werden, welche zwischen den wenigstens zwei Abtast-Empfangseinheiten angeordnet ist.

Bei einer vorteilhaften Ausgestaltung des Verfahrens können die Positionsinformationen und die Farbinformationen in getrennten Messungen ermittelt werden oder die Positionsinformationen und die Farbinformationen in einer gemeinsamen Messung ermittelt werden.

Durch die Ermittlung der Farbinformationen und der Positionsinformationen in getrennten Messungen kann die Messgenauigkeit verbessert werden.

Vorteilhafterweise können die Farbinformationen und die Positionsinformationen abwechselnd mit wenigstens einer Farbmessung und wenigstens einer Positionsmessung ermittelt werden. Auf diese Weise können die Farbinformationen und die Positionsinformationen zeitlich nah gewonnen werden. So können die Farbinformationen und die Positionsinformationen besser zu gemeinsamen Objektinformationen fusioniert werden.

Vorteilhafterweise kann während einer Farbmessung, in der die Farbinformationen ermittelt werden, mit den wenigstens zwei Abtast-Empfangseinheiten eine Hintergrundrauschmessung durchgeführt werden. Auf diese Weise kann ein Signal-Rausch-Verhältnis verbessert werden.

Durch die Ermittlung der Farbinformationen und der Positionsinformationen in einer gemeinsamen Messung kann die gesamte Messzeit verringert werden.

Vorteilhafterweise können die Farbinformationen und die Positionsinformationen eine unterschiedliche Semantik bezogen auf ihre Empfangseinheiten aufweisen.

Vorteilhafterweise können innerhalb einer gemeinsamen Messung die gewonnenen Farbinformationen als Äquivalent für das Hintergrundrauschen für wenigstens eine Abtast-Empfangseinheit verwendet werden. Aus dem Signal der wenigstens einen Abtast-Empfangseinheit kann eine Positionsinformation ermittelt werden. So kann das Hintergrundrauschen aller Empfangseinheiten, also der Abstands-Empfangseinheiten und der Farb-Empfangseinheiten, bestimmt werden. Dabei kann das Hintergrundrauschen der Farb-Empfangseinheiten zu Ermittlung der Farbinformation verwenden werden.

Im Übrigen gelten die im Zusammenhang mit der erfindungsgemäßen Detektionsvorrichtung, dem erfindungsgemäßen Fahrzeug und dem erfindungsgemäßen Verfahren und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen.

Es zeigen schematisch
- Figur 1: eine Vorderansicht eines Fahrzeugs mit einem Fahrerassistenzsystem und einem LiDAR-System zur Überwachung eines Überwachungsbereichs in Fahrtrichtung vor dem Fahrzeug;
- Figur 2: eine Funktionsdarstellung des Fahrzeugs aus der Figur 1 mit dem Fahrerassistenzsystem und dem LiDAR-System;
- Figur 3: eine Vorderansicht einer Empfangsmatrix einer Empfangseinrichtung des LiDAR-Systems aus den Figuren 1 und 2;
- Figur 4: einen Schnitt durch die Empfangsmatrix der Empfangseinrichtung des LiDAR-Systems aus der Figur 3 entlang der dortigen Schnittlinie IV-IV.

In den Figuren sind gleiche Bauteile mit gleichen Bezugszeichen versehen.

### Ausführungsform(en) der Erfindung

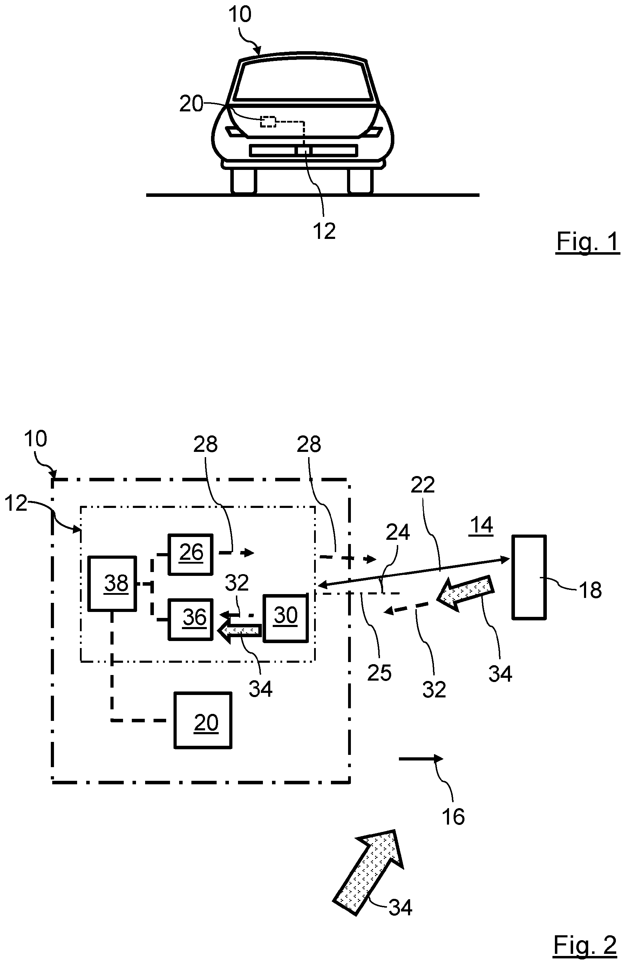

In der Figur 1 ist ein Fahrzeug 10 in Form eines Personenkraftwagens in der Vorderansicht gezeigt. Die Figur 2 zeigt eine Funktionsdarstellung des Fahrzeugs 10.

Das Fahrzeug 10 verfügt über eine optische Detektionsvorrichtung beispielsweise in Form eines LiDAR-Systems 12. Das LiDAR-System 12 ist beispielhaft in der vorderen Stoßstange des Fahrzeugs 10 angeordnet und in einen Überwachungsbereich 14 in Fahrtrichtung 16 vor dem Fahrzeug 10 gerichtet. Mit dem LiDAR-System 12 kann der Überwachungsbereich 14 auf Objekte 18 hin überwacht werden. Das LiDAR-System 12 kann auch an anderer Stelle des Fahrzeugs 10 angeordnet und anders ausgerichtet sein.

Mit dem LiDAR-System 12 können stehende oder bewegte Objekte 18, beispielsweise Fahrzeuge, Personen, Tiere, Pflanzen, Hindernisse, Fahrbahnunebenheiten, insbesondere Schlaglöcher oder Steine, Fahrbahnbegrenzungen, Verkehrszeichen, Freiräume, insbesondere Parklücken, Niederschlag oder dergleichen, erfasst werden.

Ferner verfügt das Fahrzeug 10 über ein Fahrerassistenzsystem 20. Mit dem Fahrerassistenzsystem 20 kann das Fahrzeug 10 autonom oder teilweise autonom betrieben werden. Das Fahrerassistenzsystem 20 ist funktional mit dem LiDAR-System 12 verbunden. So können Objektinformationen, beispielsweise Farbinformationen und Positionsinformationen, über Objekte 18 im Überwachungsbereich 14, welche mit dem LiDAR-System 12 erfasst werden, an das Fahrerassistenzsystem 20 übermittelt werden. Mit dem Fahrerassistenzsystem 20 können die Objektinformationen zur Unterstützung von Funktionen des Fahrzeugs 10 herangezogen werden.

Die Positionsinformationen eines Objekts 18, welche mit dem LiDAR-System 12 ermittelt werden können, umfassen beispielhaft eine Entfernung 22, eine Geschwindigkeit und eine Richtung 24 des Objekts 18 relativ zu dem Fahrzeug 10, respektive zu dem LiDAR-System 12. Die Richtung 24 kann beispielsweise als Azimut beispielsweise in Bezug auf eine Fahrzeuglängsachse 25 des Fahrzeugs 10 angegeben werden.

Das LiDAR-System 12 umfasst beispielhaft eine Sendeeinrichtung 26, eine Strahlbeeinflussungseinrichtung 30 und eine Empfangseinrichtung 36.

Mit der Sendeeinrichtung 26 können elektromagnetische Abtaststrahlen 28 gesendet werden. Die Abtaststrahlen 28 sind beispielhaft gepulste Laserstrahlen mit Wellenlängen beispielsweise im nahen Infrarot. Die Sendeeinrichtung 26 verfügt als Lichtquelle beispielsweise über eine Laserdiode, mit welcher die Abtaststrahlen 28 erzeugt werden können. Die Sendeeinrichtung 26 kann auch mehr als eine Lichtquelle, beispielsweise mehrere Laserdioden, aufweisen.

Beispielhaft kann es sich bei dem LiDAR-System 12 um ein sogenanntes Flash-LiDAR-System handeln, bei dem jeder Abtaststrahl 28 den gesamten Überwachungsbereich 14 ausleuchtet. Die Sendeeinrichtung 26 kann hierzu entsprechende optische Bauteile, beispielsweise Linsen, Diffusoren, Beugungselemente, diffraktive optische Elemente, strahlformende Elemente oder dergleichen aufweisen, mit denen die Abtaststrahlen 28 so beeinflusst werden, dass sie den Überwachungsbereich 14 möglichst gleichmäßig ausleuchten.

Die Strahlbeeinflussungseinrichtung 30 befindet sich vom Überwachungsbereich 14 aus betrachtet vor der Empfangseinrichtung 36. Mit der Strahlbeeinflussungseinrichtung 30 können elektromagnetische Strahlen, beispielsweise an einem Objekt 18 reflektierte Abtaststrahlen 32 und an einem Objekt 18 reflektierte elektromagnetische Beleuchtungsstrahlen 34 veränderbar in ihrer Form und in ihrer Ausbreitungsrichtung gelenkt werden. Die Strahlbeeinflussungseinrichtung 30 kann beispielsweise optische Elemente, wie optische Linsen, Spiegel, diffraktive optische Elemente oder dergleichen aufweisen, mit denen elektromagnetische Strahlen entsprechend beeinflusst werden können.

Die elektromagnetischen Beleuchtungsstrahlen 34 können beispielsweise Sonnenlicht und/oder Kunstlicht von einem bezüglich dem LiDAR-System 12 externen oder internen Lichtquellen, beispielsweise einem Blitzlicht, aufweisen oder daraus bestehen. Beispielhaft enthalten die Beleuchtungsstrahlen 34 die für das menschliche Auge sichtbaren Farbanteile Rot, Grün und Blau. Je größer der Wellenlängenbereich der Beleuchtungsstrahlen 34 zumindest im sichtbaren Bereich ist, umso genauer können die Farbinformationen zumindest bezogen auf die Sensibilität des menschlichen Auges ermittelt werden. Mit den Beleuchtungsstrahlen 34 sollten Objekte 18 zumindest auf der Seite, welche dem LiDAR-System 12 zugewandt ist, beleuchtet werden, sodass die reflektierten Beleuchtungsstrahlen 34 mit dem LiDAR-System 12 erfasst werden können.

Mit der Empfangseinrichtung 36 können die reflektierten Abtaststrahlen 32 und die reflektierten Beleuchtungsstrahlen 34 in entsprechende elektrische Signale umgewandelt werden. Die elektrischen Signale können an eine elektronische Steuer- und Auswerteeinrichtung 38 des LiDAR-Systems 12 übermittelt und mit dieser verarbeitet werden.

Die Steuer- und Auswerteeinrichtung 38 umfasst Mittel zur Steuerung des LiDAR-Systems 12 und zur Verarbeitung von elektrischen Signalen. Alternativ können die Mittel zur Steuerung und die Mittel zur Auswertung auch separat ausgestaltet sein. Es können eine Steuereinrichtung und Auswerteeinrichtung getrennt voneinander realisiert sein. Die Mittel zur Steuerung und zur Auswertung sind auf softwaremäßigem und hardwaremäßigem Wege realisiert. Teile der Steuer- und Auswerteeinrichtung 38 die gesamte Steuer- und Auswerteeinrichtung 38 können auch mit einer elektronischen Steuereinrichtung des Fahrzeugs 10, beispielsweise auch mit dem Fahrerassistenzsystem 20, kombiniert sein.

Aus den Abtaststrahlen 32 können mit dem LiDAR-System 12 Positionsinformationen über ein Objekt 18 gewonnen werden. So kann beispielhaft nach einem Lichtlaufzeitverfahren, bei dem die Laufzeit zwischen dem Senden eines Abtaststrahls 28 und dem Empfang des entsprechenden reflektierten Abtaststrahls 32 gemessen wird, die Entfernung 22 des Objekts 18 relativ zu dem LiDAR-System 12 als Positionsinformation ermittelt werden. Ferner kann die Richtung 24 des Objekts 18 relativ zum LiDAR-System 12 als weitere Positionsinformation ermittelt werden. Aus den Abtaststrahlen 28 und den reflektierten Abtaststrahlen 32 kann darüber hinaus beispielsweise aus Dopplerverschiebungen bei den reflektierten Abtaststrahlen 32 eine Geschwindigkeit des Objekts 18 relativ zum LiDAR-System 12 als zusätzliche Positionsinformation ermittelt werden.

Aus den reflektierten Beleuchtungsstrahlen 34 können mit dem LiDAR-System 12 Farbinformationen, beispielsweise Graustufeninformationen, über das erfasste Objekt 18 ermittelt werden.

Die Farbinformationen und die Positionsinformationen über das Objekt 18 können beispielsweise mit der Steuer- und Auswerteeinrichtung 38 oder einer anderen Einrichtung zu gesamten Objektinformationen fusioniert werden. Mit den gesamten Objektinformationen kann das Objekt 18 genauer charakterisiert werden. Die gesamten Objektinformationen, welche die fusionierten Positionsinformationen und Farbinformationen enthalten, können mit der Steuer- und Auswerteeinrichtung 38 zur an das Fahrerassistenzsystem 20 übermittelt werden und mit dem Fahrerassistenzsystem 20 verarbeitet.

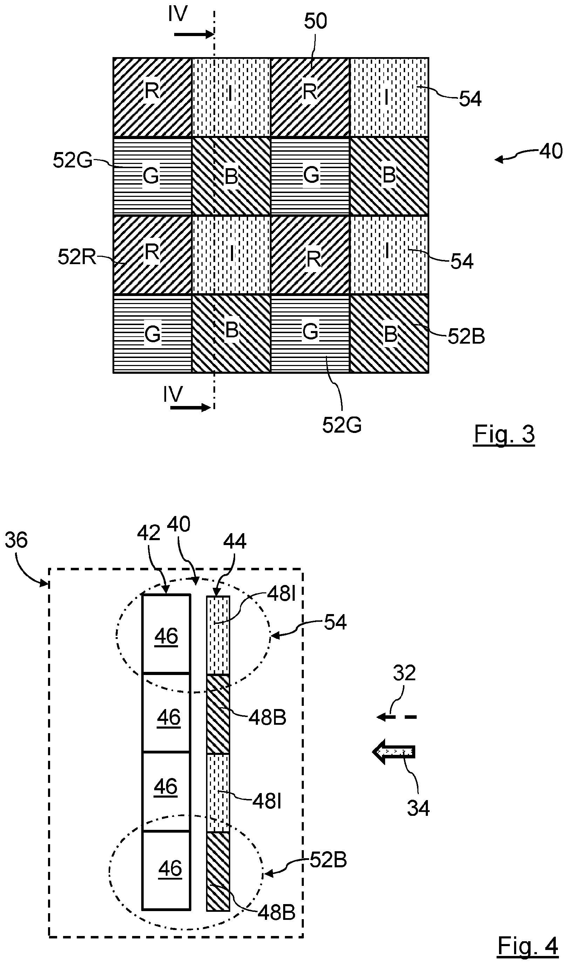

Mit der Strahlbeeinflussungseinrichtung 30 können aus dem Überwachungsbereich 14 kommende elektromagnetische Strahlen, nämlich die reflektierten Abtaststrahlen 32 und die reflektierten Beleuchtungsstrahlen 34, auf eine in der Figur 3 gezeigte Empfangsmatrix 40 der Empfangseinrichtung 36 abgebildet werden. Die Strahlbeeinflussungseinrichtung 30 bildet mit der Empfangseinrichtung 36 ein optisch abbildendes System. Beispielhaft ist die in der Figur 3 gezeigte Empfangsmatrix 40 der besseren Übersichtlichkeit wegen lediglich als 4x4-Matrix ausgestaltet. In der Regel ist die Empfangsmatrix 40 deutlich größer. Beispielsweise kann die Empfangsmatrix 40 eine 100x100-Matrix oder eine noch größere Matrix sein.

Die Empfangseinrichtung 36 verfügt über einen Empfänger 42, beispielsweise in Form eines CCD-Chips, eine Filtermatrix 44 und der besseren Übersichtlichkeit wegen in den Figuren nicht gezeigte elektronische Bauteile. Die Empfangsmatrix 40 wird aus weiter unten beschriebenen Empfangseinheiten 52 und 54, welche aus Empfangselementen 46 des Empfängers 42 und Filterelementen 48 der Filtermatrix 44 bestehen, gebildet.

Der Empfänger 42 umfasst eine Vielzahl von Empfangselementen 46, welche auch als "Pixel" bezeichnet werden können. Die die beispielhaft 16 Empfangselemente 46 sind entsprechend der Empfangsmatrix 40 matrixförmig angeordnet.

Die Filtermatrix 44 umfasst eine Vielzahl von optischen Filterelementen 48, nämlich Farb-Filterelementen und Abtast-Filterelementen. Die beispielhaft 12 Farb-Filterelemente werden der besseren Unterscheidbarkeit wegen als Rot-Filterelemente 48R, Grün-Filterelemente 48G und Blau-Filterelemente 48B bezeichnet. Die beispielhaft vier Abtast-Filterelemente sind besseren Unterscheidbarkeit wegen mit dem Bezugszeichen 48l versehen.

Die Farb-Filterelemente 48R, 48G und 48B und die Abtast-Filterelemente 48l sind beispielhaft jeweils als Bandbreitenfilter realisiert. Die Rot-Filterelemente 48R sind durchlässig für elektromagnetische Strahlen mit Wellenlängen im sichtbaren Rotbereich, die Grün-Filterelemente 48G sind durchlässig für elektromagnetische Strahlen mit Wellenlängen im sichtbaren Grünbereich und die Blau-Filterelemente 48B sind durchlässig für elektromagnetische Strahlen mit Wellenlängen im sichtbaren Blaubereich. Die Abtast-Filterelemente 48l sind durchlässig für die Abtaststrahlen 28 und die reflektierten Abtaststrahlen 32 mit Wellenlängen im nahen Infrarot.

Jedem Empfangselement 46 des Empfängers 42 ist jeweils eines der Filterelemente 48 zugeordnet. Ein Empfangselement 46 und ein entsprechendes Farb-Filterelement, nämlich ein Rot-Filterelement 48R, Grün-Filterelement 48G oder ein Blau-Filterelement 48B, bilden gemeinsam eine Farb-Empfangseinheit 52, nämlich eine Rot-Empfangseinheit 52R, eine Grün-Empfangseinheit 52G oder eine Blau-Empfangseinheit 52B. Ein Empfangselement 46 und ein entsprechendes Abtast-Filterelement 48l bilden gemeinsam eine Abtast-Empfangseinheit 54. Die Farb-Empfangseinheiten 52, respektive 52R, 52B und 52G, und die Abtast-Empfangseinheiten 54 bilden insgesamt die Empfangsmatrix 40.

Die Filterelemente 48, und entsprechend die Farb-Empfangseinheiten 52 und die Abtast-Empfangseinheiten 54, sind beispielhaft in Art einer sogenannten Bayer-Matrix in einem Schachbrettmuster angeordnet, wobei die Hälfte der Grün-Filterelemente 48G, also der Grün-Empfangseinheiten 52G, in einer Bayer-Matrix durch Abtast-Filterelemente 48l, also Abtast-Empfangseinheiten 54, ersetzt ist. Mit einer Bayer-Matrix wird bekanntermaßen die typische Sensibilität des menschlichen Auges in Bezug auf Farben durch entsprechende Gewichtung der Farb-Filterelemente von RGB-Filtern simuliert. Ein RGB-Filter entsprechend einer Bayer-Matrix besteht meist zu 50 % aus Grün und je 25 % aus Rot und Blau. Die in der Figur 3 gezeigte Empfangsmatrix 40 gemäß dem Ausführungsbeispiel verfügt beispielhafte über vier Grün-Empfangseinheiten 52G, vier Rot-Empfangseinheiten 52R, vier Blau-Empfangseinheiten 52B und vier Abtast-Empfangseinheiten 54.

Um bei der erfindungsgemäßen Empfangseinrichtung 36 die im Vergleich zur Bayer-Matrix geringere Anzahl von Grün-Empfangseinheiten 52G auszugleichen, ist die Filtertransparenz der Grün-Filterelemente 48G doppelt so groß vorgegeben wie die Filtertransparenz der Rot-Filterelemente 48R und der Blau-Filterelemente 48B. Alternativ oder zusätzlich kann der Mangel an Grün-Empfangseinheiten 52G durch entsprechende Gewichtung der empfangenen elektromagnetischen Strahlen bei der Auswertung beispielsweise auf softwaremäßigem Wege oder durch Anpassung von Auslesezeiten der unterschiedlichen Farb-Empfangseinheiten 52, respektive 52R, 52G, 52B, ausgeglichen werden.

Die Abtast-Empfangseinheiten 54 sind jeweils im Wechsel mit einer Farb-Empfangseinheit 52 angeordnet. Dabei sind die Abtast-Empfangseinheiten 54 in der Figur 3 in horizontaler Richtung betrachtet jeweils zwischen zwei Rot-Empfangseinheiten 52R angeordnet. In vertikaler Richtung betrachtet sind die Abtast-Empfangseinheiten 54 jeweils zwischen zwei Blau-Empfangseinheiten 52 angeordnet. In der Diagonale sind die Abtast-Empfangseinheiten 54 jeweils zwischen zwei Grün-Empfangseinheiten 52 angeordnet. Benachbarte Abtast-Empfangseinheiten 54 sind auf diese Weise jeweils durch einen Farb-Empfangseinheit 52, respektive 52R, 52G, 52B, getrennt, sodass ein Übersprechen der Empfangselemente 46 der benachbarten Abtast-Empfangseinheiten 54 beim Empfang insbesondere von reflektierten Abtaststrahlen 32 verhindert wird.

Zur Überwachung des Überwachungsbereichs 14 auf Objekte 18 hin werden mit dem LiDAR-System 12 mehrere Messungen durchgeführt, die im Folgenden beispielhaft erläutert werden. Dabei werden beispielhaft in einer Messsequenz abwechselnd eine Positionsmessung und eine Farbmessung durchgeführt. Bei einer Alternative des Verfahrens können eine Positionsmessung und eine Farbmessung in einer gemeinsamen Messung auch gemeinsam durchgeführt werden.

Zur Durchführung einer Positionsmessung wird mit der Sendeeinrichtung 26 ein Abtaststrahl 28 in Form eines Flash-Laserpulses in den Überwachungsbereich 14 gesendet, sodass dieser ausgeleuchtet wird.

Der an dem Objekt 18 in Richtung des LiDAR-Systems 12 reflektierte Abtaststrahl 28 gelangt als reflektierter Abtaststrahl 32 zu der Strahlbeeinflussungseinrichtung 30.

Mit der Strahlbeeinflussungseinrichtung 30 wird der reflektierte Abtaststrahl 32 auf die Empfangsmatrix 40 der Empfangseinrichtung 36 abgebildet. Der Abtaststrahl 32 wird nur mit den angeleuchteten Abtast-Empfangseinheiten 54 empfangen. Die Farb-Empfangseinheiten 52, respektive 52R, 52G und 52B, hingegen sind wegen der Farb-Filterelemente 48, respektive 48R, 48G und 48B, welche für die Wellenlänge des reflektierten Abtaststrahlen 32 nicht durchlässig sind, für den reflektierten Abtaststrahlen 32 "blind".

Mit den Abtast-Empfangseinheiten 54 wird der empfangene reflektierte elektromagnetische Abtaststrahl 32 in elektrische Signale umgewandelt, welche mit der Steuer- und Auswerteeinrichtung 38 verarbeitet werden. Aus der Zeit zwischen dem Senden des Abtaststrahls 28 bis zum empfangen des reflektierten Abtaststrahls 32 wird die Entfernung 22 des Objekts 18 zu dem LiDAR-System 12 bestimmt. Aus der Position der mit dem reflektierten Abtaststrahlen 52 angeleuchteten Abtast-Empfangseinheiten 54 in der Empfangsmatrix 40 wird die Richtung 24 des Objekts 18 ermittelt. Die Geschwindigkeit wird aus einer Dopplerverschiebung der reflektierten Abtaststrahlen 32 ermittelt. Alternativ kann die Richtung 24 auch über eine entsprechende Einstellung der Strahlbeeinflussungseinrichtung 30 und/oder der Sendeeinrichtung 26 bei der Messung ermittelt werden.

In der Pause zwischen zwei Positionsmessungen wird eine Farbmessung durchgeführt. Während die Farbmessung durchgeführt wird, können die elektrischen Signale aus der Positionsmessung verarbeitet werden.

Bei der Farbmessung werden Beleuchtungsstrahlen 34, beispielsweise Sonnenlicht oder Licht einer künstlichen Lichtquelle, welche an dem Objekt 18 in Richtung des LiDAR-Systems 12 reflektiert werden, mit der Strahlbeeinflussungseinrichtung 30 auf die Empfangsmatrix 40 der Empfangseinrichtung 36 abgebildet. Dabei werden die jeweiligen Farbanteile Rot, Grün und Blau entsprechend der Anordnung der Farb-Empfangseinheiten 52, nämlich der Rot-Empfangseinheiten 52R, der Grün-Empfangseinheiten 52G und der Blau-Empfangseinheiten 52B, auf der Empfangsmatrix 40 empfangen und jeweils in elektrische Signale umgewandelt. Die Abtast-Empfangseinheiten 54 hingegen sind wegen der Abtast-Filterelemente 48l, welche lediglich für den NIR Bereich durchlässig sind, für den sichtbaren Bereich der Beleuchtungsstrahlen 34 "blind".

Da die Farb-Empfangseinheiten 52, respektive die Rot-Empfangseinheiten 52R, die Grün-Empfangseinheiten 52G und die Blau-Empfangseinheiten 52B, wie weiter oben beschrieben, entsprechend gewichtet sind, werden bei der Farbmessung in zwei Raumdimensionen ortsaufgelöste Farbinformationen über das Objekt 18 entsprechend der typische Sensibilität des menschlichen Auges ermittelt. Da die Intensitäten der reflektierten Beleuchtungsstrahlen 34 auch abhängig von der Entfernung 22 sind, enthalten die ortsaufgelösten Farbinformationen auch Farbinformationen über die dritte Raumdimension, sodass insgesamt bei der Farbmessung dreidimensionale Farbinformationen über das Objekt 18 ermittelt werden können.

Nach Durchführung eines Messzyklus mit einer Positionsmessung und einer Farbmessung können die Farbinformationen und Objektformationen, die bei den einzelnen Messungen gewonnenen wurden, fusioniert werden.

Die Farbinformationen und die Positionsinformationen, gegebenenfalls die fusionierten Objektinformationen, werden beispielhaft anders Fahrerassistenzsystem 20 übermittelt. Mit dem Fahrerassistenzsystem 20 werden entsprechende Funktionen des Fahrzeugs 10 auf Basis der Objektinformationen beeinflusst, beispielsweise gesteuert oder geregelt. Das Fahrzeug 10 kann so autonom oder teilautonom betrieben werden.

## Patentansprüche

1. Optische Detektionsvorrichtung (12) zur Überwachung wenigstens eines Überwachungsbereichs (14) auf Objekte (18) hin,mit wenigstens einer Sendeeinrichtung (26), mit der elektromagnetische Strahlen (28) in den wenigstens einen Überwachungsbereich (14) gesendet werden können, mit wenigstens einer Empfangseinrichtung (36), mit der elektromagnetische Strahlen (32, 34) aus dem wenigstens einen Überwachungsbereich (14) empfangen werden können, mit wenigstens einer Auswerteeinrichtung (38), mit der aus empfangenen elektromagnetischen Strahlen (32, 34) Positionsinformationen (22, 24) und Farbinformationen (R, G, B) wenigstens eines erfassten Objektes (18) ermittelt werden können, wobei wenigstens eine Empfangseinrichtung (36) aufweist wenigstens eine Empfangseinheit (52R, 52G, 52B), die zum Empfang von elektromagnetischen Beleuchtungsstrahlen (34) ausgestaltet ist, aus denen Farbinformationen (R, G, B) wenigstens eines Objekts (18) ermittelt werden können, und wenigstens eine Empfangseinheit (54), die zum Empfang von elektromagnetischen Abtaststrahlen (28, 32) mit Wellenlängen in wenigstens einem vorgegebenen Wellenlängenbereich ausgestaltet ist, aus denen Positionsinformationen (22, 24) wenigstens eines erfassten Objekts (18) ermittelt werden können, wobei die Abtaststrahlen (28, 32) mit wenigstens einer Sendeeinrichtung (26) gesendet und an dem wenigstens einen Objekt (18) reflektiert werden können, **dadurch gekennzeichnet, dass** wenigstens eine Empfangseinrichtung (36) wenigstens zwei Abtast-Empfangseinheiten (54) aufweist, mit denen reflektierte elektromagnetische Abtaststrahlen (32) empfangen werden können, die wenigstens zwei Abtast-Empfangseinheiten (54) jeweils ausschließlich für den Empfang des wenigstens einen Wellenlängenbereich der elektromagnetischen Abtaststrahlen (32) ausgestaltet sind und zwischen den wenigstens zwei Abtast-Empfangseinheiten (54) wenigstens eine Farb-Empfangseinheit (52R, 52G, 52B) angeordnet ist die wenigstens eine Farb-Empfangseinheit (52R, 52G, 52B) zum Empfang von elektromagnetischen Beleuchtungsstrahlen (34) ausgestaltet ist.

2. Detektionsvorrichtung nach Anspruch 1, **dadurch gekennzeichnet, dass** der Wellenlängenbereich der Abtaststrahlen (32) außerhalb des für das menschliche Auge sichtbaren Wellenlängenbereichs liegt und/oder wenigstens eine Sendeeinrichtung (26) zur Sendung von Abtaststrahlen (28, 32) außerhalb des für das menschliche Auge sichtbaren Wellenlängenbereichs ausgestaltet ist und/oder wenigstens eine Abtast-Empfangseinheit (54) zum Empfang von Abtaststrahlen (28, 32) außerhalb des für das menschliche Auge sichtbaren Wellenlängenbereichs ausgestaltet ist.

3. Detektionsvorrichtung nach Anspruch 1 oder 2, **dadurch gekennzeichnet, dass** wenigstens eine Farb-Empfangseinheit (52R, 52G, 52B) zum Empfang von Beleuchtungsstrahlen (34) zumindest teilweise in einem für das menschliche Auge sichtbaren Wellenlängenbereich ausgestaltet ist und/oder wenigstens zwei Farb-Empfangseinheiten (52R, 52G, 52B) zum Empfang von Beleuchtungsstrahlen (34) in unterschiedlichen, zumindest teilweise für das menschliche Auge sichtbaren Wellenlängenbereich ausgestaltet sind.

4. Detektionsvorrichtung nach einem der vorigen Ansprüche, **dadurch gekennzeichnet, dass** wenigstens eine Farb-Empfangseinheit (52R) zum Empfang von Beleuchtungsstrahlen (34) in einem zumindest teilweise für das menschliche Auge sichtbaren roten Wellenlängenbereich ausgestaltet ist, wenigstens eine Farb-Empfangseinheit (52B) zum Empfang von Beleuchtungsstrahlen (34) in einem zumindest teilweise für das menschliche Auge sichtbaren blauen Wellenlängenbereich ausgestaltet ist und wenigstens eine Farb-Empfangseinheit (52G) zum Empfang von Beleuchtungsstrahlen (34) im grünen Wellenlängenbereich ausgestaltet ist.

5. Detektionsvorrichtung nach einem der vorigen Ansprüche, **dadurch gekennzeichnet, dass** eine Mehrzahl von Farb-Empfangseinheiten (52R, 52G, 52B) zum Empfang von Beleuchtungsstrahlen (34) in unterschiedlichen, zumindest teilweise für das menschliche Auge sichtbaren Wellenlängenbereichen ausgestaltet sind, wobei die Farb-Empfangseinheiten (52R, 52G, 52B) entsprechend der typischen Sensibilität des menschlichen Auges gewichtet sind.

6. Detektionsvorrichtung nach einem der vorigen Ansprüche, **dadurch gekennzeichnet, dass** eine Anordnung und/oder Anzahl von mehreren Farb-Empfangseinheiten (52R, 52G, 52B) entsprechend der typischen Sensibilität des menschlichen Auges vorgegeben sind.

7. Detektionsvorrichtung nach einem der vorigen Ansprüche, **dadurch gekennzeichnet, dass** wenigstens eine Empfangseinrichtung (36) mehrere Farb-Empfangseinheiten (52R, 52G, 52B) für unterschiedliche Wellenlängenbereiche umfasst, welche unterschiedliche Empfindlichkeiten aufweisen.

8. Detektionsvorrichtung nach einem der vorigen Ansprüche, **dadurch gekennzeichnet, dass** wenigstens eine Empfangseinrichtung (36) wenigstens zwei Farb-Empfangseinheiten (52R, 52G, 52B) für unterschiedliche Wellenlängenbereiche aufweist, wobei jede Farb-Empfangseinheit (52R, 52G, 52B) ein jeweiliges Filtermittel (48R, 48G, 48B) für den entsprechenden Wellenlängenbereich umfasst, wobei Filtermittel (48R, 48G, 48B) von wenigstens zwei Farb-Empfangseinheiten (52R, 52G, 52B), welche für zwei unterschiedliche Wellenlängenbereiche vorgesehen sind, unterschiedliche Transparenz aufweisen, und/oder wobei jede Farb-Empfangseinheit (52R, 52G, 52B) wenigstens ein elektrooptisches Empfangselement (46) umfasst, wobei Empfangselemente (46) von wenigstens zwei Farb-Empfangseinheiten (52R, 52G, 52B), welche für zwei unterschiedliche Wellenlängenbereiche vorgesehen sind, unterschiedliche Empfindlichkeiten aufweisen.

9. Detektionsvorrichtung nach einem der vorigen Ansprüche, **dadurch gekennzeichnet, dass** wenigstens eine Empfangseinheit (52R, 52G, 52B, 54) wenigstens ein elektrooptisches Empfangselement (46) aufweist oder daraus besteht, welches für den Empfang von elektromagnetischen Strahlen (28, 32, 34) wenigstens in dem entsprechenden Wellenlängenbereich und zur Umwandlung in elektrische Signale ausgestaltet ist, und/oder wenigstens eine Empfangseinheit (52R, 52G, 52B, 54) wenigstens ein Filtermittel (48R, 48G, 48B, 48l) aufweist, welches zur Transmission des entsprechenden Wellenlängenbereiches ausgestaltet ist.

10. Fahrzeug (10) mit wenigstens einer optischen Detektionsvorrichtung (12) zur Überwachung wenigstens eines Überwachungsbereichs (14) auf Objekte (18) hin und wenigstens ein Fahrerassistenzsystem (20), mit dem auf Basis von Positionsinformation (22, 24) und/oder Farbinformationen (R, G, B) wenigstens eines erfassten Objekts (18), die mit der wenigstens einen Detektionsvorrichtung (12) ermittelt werden, das Fahrzeug (10) autonom oder teilautonom betrieben werden kann, **dadurch gekennzeichnet, dass** das Fahrzeug (10) wenigstens eine optische Detektionsvorrichtung (12) nach einem der vorigen Ansprüche aufweist.

11. Verfahren zum Betreiben einer optischen Detektionsvorrichtung (12) zur Überwachung wenigstens eines Überwachungsbereichs (14) auf Objekte (18) hin, bei dem elektromagnetische Strahlen (28) mit wenigstens einer Sendeeinrichtung (26) in den wenigstens einen Überwachungsbereich (14) gesendet werden, elektromagnetische Strahlen (32, 34) aus dem wenigstens einen Überwachungsbereich (14) mit wenigstens einer Empfangseinrichtung (36) empfangen werden, aus empfangenen elektromagnetischen Strahlen (32, 34) mit wenigstens einer Auswerteeinrichtung (38) Positionsinformationen (22, 24) und Farbinformationen (R, G, B) wenigstens eines erfassten Objekts (18) ermittelt werden, wobei elektromagnetische Beleuchtungsstrahlen (34) mit wenigstens eine Empfangseinheit (52R, 52G, 52B) empfangen werden und aus den empfangenen Beleuchtungsstrahlen (34) Farbinformationen (R, G, B) wenigstens eines Objekts (18) ermittelt werden, und elektromagnetische Abtaststrahlen (32) mit Wellenlängen in wenigstens einem vorgegebenen Wellenlängenbereich, die mit wenigstens einer Sendeeinrichtung (26) gesendet und an wenigstens einem Objekt (18) reflektiert werden, mit wenigstens einer Empfangseinheit (54) wenigstens einer Empfangseinrichtung (36) empfangen werden und aus wenigstens einem Teil der empfangenen Abtaststrahlen (32) Positionsinformationen (22, 24) wenigstens eines erfassten Objekts (18) ermittelt werden, **dadurch gekennzeichnet, dass** die reflektierten elektromagnetischen Abtaststrahlen (32) mit wenigstens zwei Abtast-Empfangseinheiten (54) der wenigstens einen Empfangseinrichtung (36) empfangen werden, wobei mit den wenigstens zwei Abtast-Empfangseinheiten (54) ausschließlich elektromagnetische Strahlen mit Wellenlängen in dem wenigstens einen Wellenlängenbereich der elektromagnetischen Abtaststrahlen (32) empfangen werden, die reflektierten elektromagnetischen Beleuchtungsstrahlen (34) mit wenigstens einer Farb-Empfangseinheit (52R, 52G, 52B) empfangen werden, welche zwischen den wenigstens zwei Abtast-Empfangseinheiten (54) angeordnet ist.

12. Verfahren nach Anspruch 11, **dadurch gekennzeichnet, dass** die Positionsinformationen (22, 24) und die Farbinformationen (R, G, B) in getrennten Messungen ermittelt werden oder die Positionsinformationen (22, 24) und die Farbinformationen (R, G, B) in einer gemeinsamen Messung ermittelt werden.
